# FASCICULE DE BREVET EUROPEEN

(11) **EP 1 091 314 B1**
(45) Date de publication et mention de la délivrance du brevet: **01.08.2007**
(21) Numéro de dépôt: 00402744.7
(22) Date de dépôt: 05.10.2000
(51) Int. Cl.: G06K 7/00, H01R 12/16, B60R 25/04, G06K 13/08

(54) **Agencement pour le blocage d'un support de données dans un dispositif d'échange de données et la commande sécurisée du démarrage d'un véhicule**
System zur blockierung eines Datenträgers in einer Datenaustauschvorrichtung und zur Motorstartberechtigung eines Fahrzeuges
System for securing a data carrier in a data exchange device and authorising the starting of an vehicle engine

(30) Priorité: 07.10.1999 FR 9912480
(43) Date de publication de la demande: 11.04.2001
(73) Titulaire: VALEO SECURITE HABITACLE S.A.S., 94042 Créteil Cédex (FR)
(72) Inventeur: Batty, Raoul, 58000 Nevers (FR)
(74) Mandataire: Rosolen-Delarue, Katell

(56) Documents cités:
- EP-A- 0 964 357
- FR-A- 2 713 173
- US-A- 5 054 119
- US-A- 5 594 284

## Description

La présente invention concerne un agencement pour l'échange de données entre un support de données rigide, ou semi-rigide, et un dispositif d'échange de données, notamment de lecture de données contenues dans le support.

L'invention concerne plus particulièrement un tel agencement destiné à équiper un véhicule automobile et dans lequel le support de données, qui est par exemple en forme de carte ou de badge globalement rectangulaire, porte des données d'identification de l'utilisateur du véhicule qui l'autorisent lorsqu'il introduit son badge dans le dispositif de lecture, à utiliser le véhicule en lui permettant notamment de procéder au démarrage du moteur du véhicule. Un tel agencement est montré par exemple dans la demande de brevet française numéro de publication 2713173

On connait de nombreux exemples de tels agencements dans lesquels le support de données est une carte ou un badge rigide ou semi-rigide comportant par exemple un circuit intégré, ou puce, qui est relié à des moyens de lecture du dispositif par des contacts électriques et/ou par une antenne d'échange de données.

Lors de l'introduction du badge ou de la carte dans le dispositif, celle-ci est introduite manuellement d'arrière en avant dans un logement du boîtier dans lequel le support de données occupe une position active déterminée, et le dispositif qui reçoit la carte ou le badge comporte des moyens pour retenir longitudinalement ce support de données en position active dans le boîtier de manière que l'échange de données soit assuré dans de bonnes conditions.

Selon la conception la plus répandue, ces moyens de retenue sont constitués par des simples freins, c'est-à-dire qu'il s'agit de pattes déformables élastiquement qui coopèrent par friction avec des bords latéraux et/ou avec les grandes faces de la carte.

Une telle conception des moyens de retenue du support de données dans le dispositif de lecture n'est pas entièrement satisfaisante dans le cas d'une application à un véhicule automobile dans lequel le dispositif est soumis, lors du roulage, à de nombreuses vibrations qui provoquent progressivement l'éjection du support de données, ou tout au moins son déplacement par rapport à sa position active dite de lecture.

De plus, dans le cas d'une application à un véhicule automobile, il est nécessaire de pouvoir non seulement retenir le support de données en position active, mais aussi le verrouiller en le bloquant dans cette position, en réponse à un ordre de commande de verrouillage, de manière à éviter que dans certaines configurations d'utilisation du véhicule, le conducteur ou un passager puisse extraire inopinément le support de données du dispositif de lecture.

Afin de résoudre ce problème, on a proposé dans la demande de brevet français n° 98.07249 déposée le 9 juin 1998 et publiée avec le numéro 2779562. un agencement du type dans lequel le support de données comporte un cran latéral de blocage et le boîtier comporte un levier commandé de blocage du support qui est monté pivotant, autour d'un axe perpendiculaire au plan dans lequel est située la direction longitudinale d'introduction du support de données dans le boîtier, entre une position de blocage dans laquelle une extrémité libre du levier de blocage formant doigt de blocage s'étend à l'intérieur du cran de blocage, et une position escamotée dans laquelle le doigt de blocage est situé hors du cran pour permettre l'extraction du support de données, d'avant en arrière, hors du boîtier.

Par ailleurs, pour alimenter un circuit électrique, par exemple un circuit de démarrage du moteur du véhicule qui est associé à des moyens d'échange de données avec celles contenues dans le badge, afin d'autoriser ou non un ordre de démarrage du moteur du véhicule, l'agencement proposé dans ce document est aussi du type dans lequel le pivotement du levier de blocage entre ses positions escamotée et de blocage est commandé par un bouton de commande qui est monté coulissant par rapport au boîtier, qui est relié au levier de blocage et qui est associé à un interrupteur de marche-arrêt qui commande un circuit électrique de démarrage du véhicule.

Afin de maîtriser complètement la séquence électrique de démarrage du véhicule de manière simple, c'est à dire sans que l'utilisateur n'ait besoin d'agir sur un commutateur rotatif qui, de manière connue, provoque habituellement en séquence l'alimentation de différents circuits électriques du véhicule, l'invention propose un agencement du type mentionné précédemment, caractérisé en ce que le boîtier porte au moins un premier commutateur électrique qui permet l'alimentation du circuit électrique de démarrage du véhicule ("+" "servitude") et sur lequel le support de données vient agir lors de sa course d'introduction, d'arrière en avant, dans le boîtier.

Selon d'autres caractéristiques de l'invention :
- le boîtier porte deux commutateurs qui sont agencés longitudinalement dans le boîtier parmi lesquels ledit premier commutateur et un deuxième commutateur électrique qui permet l'alimentation électrique des accessoires, et, lors de l'introduction progressive du support de données dans le logement du boîtier, d'arrière en avant, le corps du support de données vient agir successivement sur le premier commutateur puis sur le deuxième commutateur électrique lorsque le support de données est entièrement introduit en position active dans le logement du boîtier ;
- le bouton de commande est monté coulissant par rapport au boîtier selon une direction sensiblement perpendiculaire au plan dans lequel est située la direction longitudinale d'introduction du support de données dans le boîtier ;
- le bouton de commande est monté coulissant entre une position d'arrêt, dans laquelle le levier de blocage est en position escamotée, et une position de marche dans laquelle le levier de blocage est dans sa position de blocage du support de données ;
- le bouton de commande est monté coulissant selon l'axe de pivotement du levier de blocage qui est relié au bouton de commande par des moyens de transformation de mouvement qui convertissent chaque course linéaire du bouton de commande, entre ses positions de marche et d'arrêt, en une course angulaire du levier de blocage entre ses positions de blocage et escamotée ;
- les moyens de transformation de mouvement bloquent angulairement le levier de blocage dans un sens de manière à empêcher l'extraction du support de données, d'arrière en avant, lorsque le levier de blocage est en position de blocage ;
- chaque course linéaire du bouton de commande provoque une rotation d'un quart de tour du levier de blocage qui comporte deux doigts de blocage diamétralement opposés ;
- le bouton de commande comporte un élément coulissant dont une extrémité libre agit sur un troisième commutateur électrique d'alimentation électrique du démarreur du moteur du véhicule pour assurer la fonction d'interrupteur de marche arrêt.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en perspective qui illustre un exemple de réalisation d'un agencement conforme aux enseignements de l'invention sur laquelle le badge de support de données est illustré en position extraite, au-dessus du logement du boîtier qui le reçoit en position active ;
- la figure 2 est une vue similaire à celle de la figure 1 sur laquelle le badge est illustré en position active ;
- la figure 3 est une vue schématique en perspective à plus grande échelle qui illustre certains composants de l'agencement selon l'invention ;
- la figure 4 est une vue schématique en perspective à plus grande échelle qui illustre de manière éclatée et schématiquement les composants du bouton de commande associé au levier de blocage ; et
- les figures 5 et 6 sont des vues similaires à celle de la figure 4 sur lesquelles la le levier de blocage et représenté respectivement en position escamotée et en position de blocage.

Dans la description qui va suivre, on utilisera, à titre non limitatif, les termes verticaux, horizontal, avant, arrière, etc. notamment en référence aux figures et ceci pour faciliter la compréhension de la description.

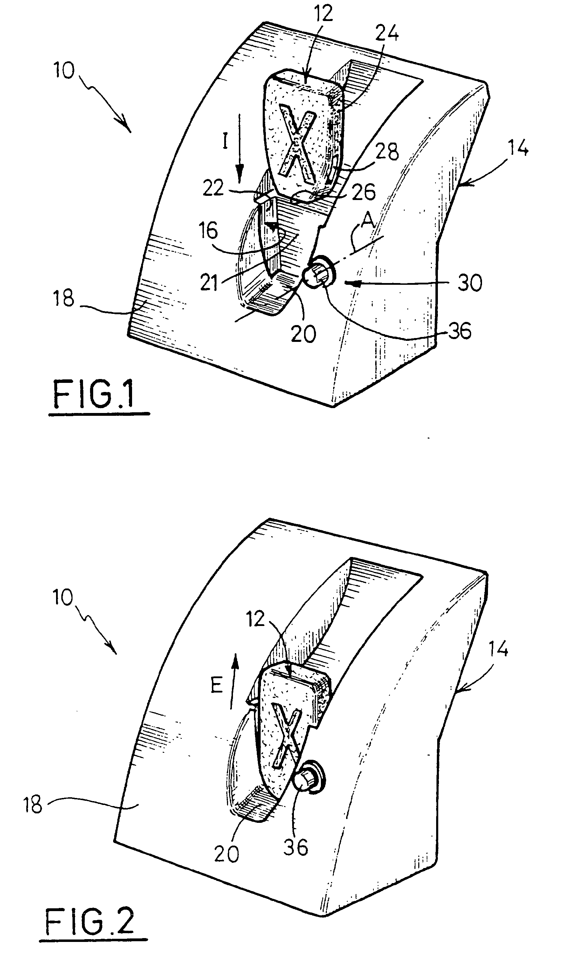

L'agencement 10 selon l'invention représenté notamment dans son ensemble aux figures 1 et 2 comporte un boîtier 14 destiné à recevoir un badge 12 formant support de données. Le badge 12 est un élément rigide, ici de forme générale sensiblement parallélépipédique rectangle, qui est susceptible d'être reçu dans un logement 16 formé dans le boîtier 14.

Le boîtier 14 se présente sous la forme d'une console, par exemple en matière plastique moulée, dans laquelle est formé le logement 16 qui est ouvert dans la face frontale 18 de la console et qui est aussi ouvert verticalement vers le haut en étant délimité verticalement vers le bas par un fond horizontal inférieur 20.

Le logement 16 est de forme générale complémentaire de celle du badge 12, et notamment de la partie avant de celui-ci, c'est-à-dire sa partie inférieure en considérant les figures, de manière à recevoir cette partie avant et à guider le badge 12 dans le logement 16 lorsque que celui-ci y est introduit longitudinalement d'arrière en avant, c'est-à-dire de haut en bas en considérant la figure 1, ou lorsqu'il est extrait du logement 16 longitudinalement d'avant en arrière, c'est-à-dire de bas en haut en partant de la position illustrée à la figure 2.

A cet effet, le logement 16 est délimité latéralement par deux faces verticales 22 dont l'une, à gauche en considérant la figure 1 est pleine et dont l'autre (non visible), opposée à droite, est échancrée de manière à permettre le passage du doigt de blocage du levier de blocage du badge 12 qui sera décrit par la suite.

Le corps ou enveloppe du badge 12 comporte un bord latéral 24 d'orientation longitudinale, c'est-à-dire parallèle à la direction d'introduction du badge 12 dans la console 14, dans lequel est formé, au voisinage du bord transversal avant 26 du badge 12, un cran de blocage 28 qui débouche latéralement dans le bord 24.

Conformément aux enseignements de l'invention, l'agencement 10 comporte un organe de commande 30 qui se présente globalement sous la forme d'un bouton qui est monté coulissant par rapport au boîtier 14 selon une direction horizontale A et qui est perpendiculaire à la direction 1 d'introduction du badge 12 en étant globalement perpendiculaire aux grandes faces rectangulaires frontale 32 et dorsale 34 du corps du badge 12.

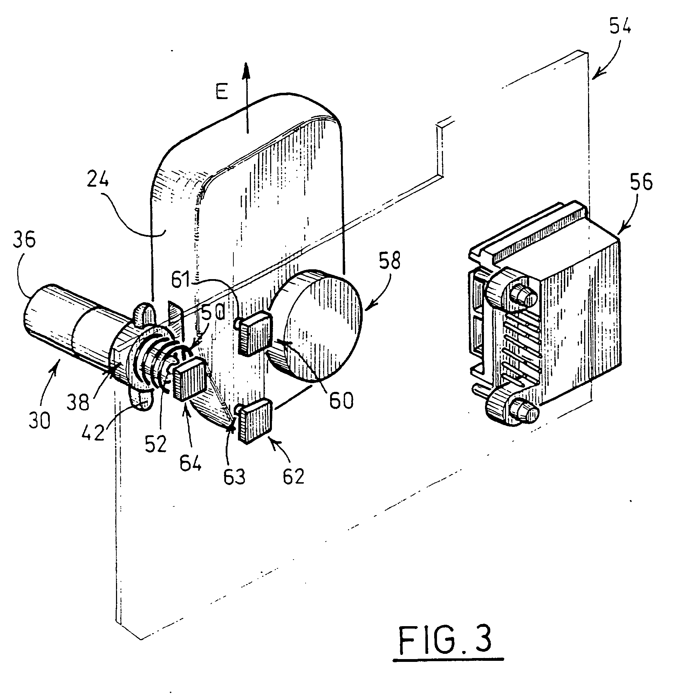

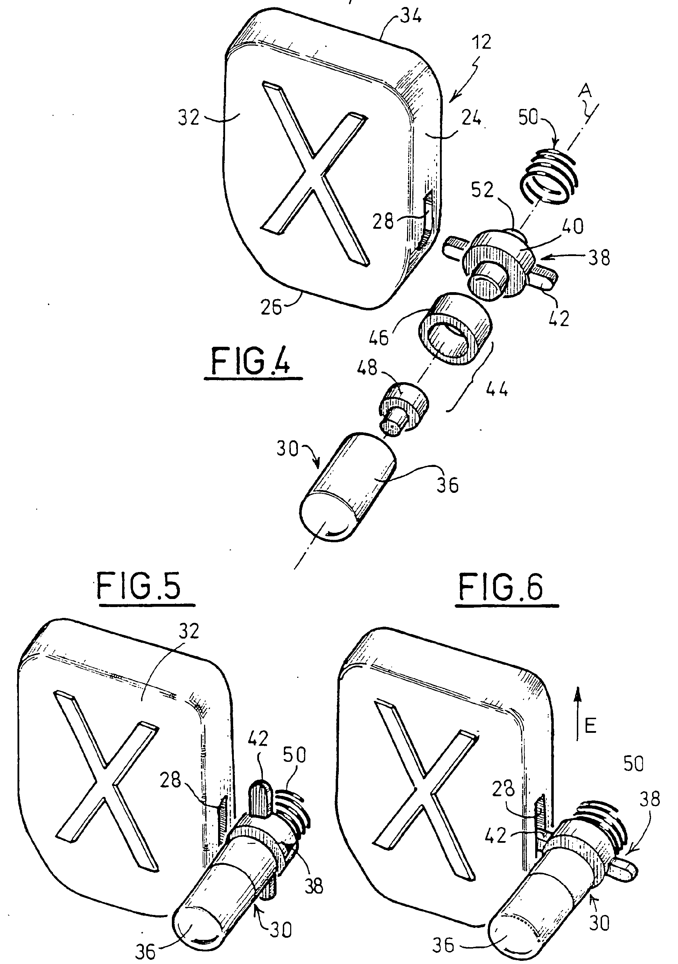

Comme on peut le voir notamment aux figures 3 et 4, l'organe de commande 30 comporte un bouton proprement dit 36 qui fait saillie à l'extérieur du boîtier 14 pour permettre une action manuelle sur l'organe de commande 30.

L'organe de commande 30 a pour première fonction de commander les déplacements d'un levier 38 de blocage du badge 12.

Le levier 38 comporte un corps central 40 qui est monté tournant autour de la direction A qui constitue ainsi l'axe de pivotement du levier de blocage 38, et à partir duquel s'étendent diamétralement deux doigts opposés 42 de blocage.

La position relative du levier de blocage 38 par rapport au logement 16, la longueur diamétrale des doigts de blocage 42, et les dimensions et la conformation du cran de blocage 28 sont telles que chaque doigt de blocage 42 peut pénétrer à l'intérieur du cran de blocage 28 ou sortir de ce dernier à chaque fois que le levier de blocage 38 fait un quart de tour autour de son axe A comme on peut le voir en comparant les figures 5 et 6. Bien entendu, à cet effet, chaque doigt de blocage 42 passe à travers l'échancrure formée à cet effet dans la paroi latérale vertical 22 adjacente au bord 24 du badge 12.

D'une manière connue dans différents dispositifs électriques, l'organe de commande 30 est du type "push-push", c'est-à-dire que chaque action axiale d'enfoncement du bouton 36 provoque, par l'intermédiaire de moyens de transformation de mouvement et d'indexation angulaire 44, représentés schématiquement aux figures, une rotation d'un quart de tour du levier de blocage 38, toujours dans le même sens et par exemple dans le sens anti-horaire en considérant les figures 4 à 6, et en empêchant la rotation en sens inverse.

Les moyens 44 sont par exemple du type dans lequel un indexeur 46 comporte des rainures axiales et des crans qui coopèrent avec des nervures et des crans complémentaires d'un coulisseau 48.

Lors de chaque enfoncement du bouton 36, le levier de blocage 38 subit également un léger déplacement axial, de l'avant vers l'arrière en considérant les figures 4 à 6, à l'encontre d'un effort de rappel qui lui est appliqué par un ressort 50, le cran de blocage 28 étant dimensionné à cet effet.

Le corps 40 du levier de blocage 38 se prolonge par un doigt axial de commande 52 qui permet, comme cela sera expliqué par la suite, d'agir sur un commutateur électrique de manière que l'organe de commande 30, outre sa fonction de commande de la rotation du levier de blocage 38, constitue aussi un bouton de commande de marche-arrêt pour commander le démarrage du moteur du véhicule.

Selon différentes conceptions possibles des moyens 44, le bouton 36 de l'organe de commande 30 peut être toujours dans la même position axiale par rapport à la face 18 du boîtier 14, où il peut être sorti en position d'arrêt et enfoncé en position de marche.

On a représenté en silhouette à la figure 3 une plaque à circuit imprimé 54 qui est agencée à l'intérieur du boîtier 14 et qui porte, sur sa face frontale tournée vers le badge 12, un connecteur électrique 56, une antenne 58 d'échange de données avec le badge 12 et trois commutateurs 60, 62 et 64.

Le premier commutateur 60 et le deuxième commutateur 62 sont agencés longitudinalement l'un à la suite de l'autre, c'est-à-dire que le premier commutateur 60 est situé verticalement au-dessus du deuxième commutateur 62, et ils sont disposés au droit du logement 16 qui comporte dans son fond vertical 21 des passages de manière que les organes de déclenchement 61 et 63 des deux commutateurs 60 et 62 fassent saillie dans le logement 16.

Ainsi, lorsque le badge 12 est introduit selon la direction I, son bord inférieur 26 et sa face dorsale 34 qui le prolonge agissent successivement en séquence sur le premier commutateur 60 puis sur le deuxième commutateur 63.

De la même manière, lorsque le badge 12 est extrait selon la direction E, c'est-à-dire verticalement de bas en haut en considérant la figure 3, il agit successivement à nouveau d'abord sur le deuxième commutateur 62 puis ensuite sur le premier commutateur 60.

Conformément aux enseignements de l'invention, le premier commutateur 60 permet l'alimentation du circuit électrique "+" SERVITUDE du circuit électrique du groupe moto propulseur du véhicule, tandis que le deuxième commutateur 62, sur lequel le badge 12 n'agit que lorsque ce dernier est en position active enfoncée verticalement vers le bas dans le logement 16, permet l'alimentation du circuit électrique "+" APC des accessoires.

Ainsi, lorsque le badge formant clé 12 est enfoncé par l'utilisateur, ce dernier provoque " en aveugle" une séquence de commutation électrique nécessaire au démarrage commandé et contrôlé du moteur du véhicule. Après la mise en place du badge, la séquence démarrage nécessite d'alimenter le circuit électrique "+" DEM du démarreur du véhicule.

À cet effet, le troisième commutateur électrique 64 est disposé sur la plaque à circuit imprimé 54 au droit de l'axe A de l'organe de commande 30 de manière que le doigt de commande 52 du levier de blocage 38 puisse agir axialement sur l'organe de déclenchement du troisième commutateur 64 qui appartient au circuit d'alimentation électrique "+" DEM du démarreur du véhicule. Ainsi, chaque action sur l'organe de commande 30 provoque d'une part la rotation d'un quart de tour du levier de blocage 38 et, d'autre part, une action sur le commutateur 64.

On décrira maintenant le fonctionnement de l'agencement selon l'invention en partant de la position illustrée à la figure 1.

Dans cette position extraite du badge 12, le levier de blocage 38 est normalement dans sa position angulaire illustrée à la figure 5, c'est-à-dire qu'aucun doigt de blocage 42 ne s'étend à l'intérieur du logement 16.

L'utilisateur introduit le badge 12 jusqu'à sa position active enfoncée représentée à la figure 2 en agissant successivement sur les deux commutateurs 60 et 62. Dans la position active du badge 12, l'utilisateur agit ensuite sur l'organe de commande 30 en l'enfonçant une fois pour provoquer la rotation d'un quart de tour du levier de blocage 38 qui occupe alors sa position illustrée à la figure 6 dans laquelle un doigt de blocage 42 est reçu dans le cran de blocage 28. Dans cette position, du fait de la conception des moyens 44, l'utilisateur ne peut pas extraire le badge 12 car le levier de blocage 38 est bloqué en rotation dans le sens horaire.

Outre le blocage du badge 12 en position active, l'action de l'utilisateur sur le bouton 36 de l'organe de commande 30 a provoqué le déclenchement du commutateur 64 qui a provoqué l'alimentation électrique du démarreur du véhicule, et donc le démarrage du moteur du véhicule.

Si l'utilisateur souhaite arrêter son véhicule et le quitter en emportant le badge 12, il appuie à nouveau sur le bouton 36 de l'organe de commande 30, pour provoquer une nouvelle course de l'organe de commande 30 depuis sa position ou état de marche vers sa position ou état d'arrêt.

Ce nouvel actionnement de l'organe de commande 30 provoque la rotation d'un quart de tour dans le sens anti-horaire du levier de blocage 38 qui est alors à nouveau dans sa position escamotée représentée notamment aux figures 3 et 5 dans laquelle aucun doigt de blocage 42 n'est reçu dans le cran de blocage 28. L'action sur l'organe de commande 30 a provoqué un nouveau déclenchement du commutateur 62, le signal correspondant étant analysé par la centrale électronique antivol et de commande du moteur comme une demande pour 'arrêter le moteur du véhicule.

Le doigt de blocage 42 étant escamoté, il est à nouveau possible extraire le badge 12 selon la direction E en venant à nouveau agir au passage sur les deux commutateurs 62 puis 60.

L'appui sur le bouton 36 est possible lorsque la clé ou badge 12 n'est pas en place, mais ceci n'a aucune influence sur le démarrage du moteur du véhicule car la séquence d'actionnement des commutateurs 60, 62 et 64 n'a pas été respectée.

La conception des moyens 44 peut aussi être telle qu'il n'est alors pas nécessaire de devoir appuyer une fois de plus sur le bouton 36 de l'organe de commande 30 pour pouvoir introduire le badge 12 formant clé dans le logement 16, car l'introduction du badge provoque alors automatiquement, en agissant sur le levier de blocage 42 par la face d'extrémité avant 26, la rotation d'un quart de tour, dans le sens anti-horaire, du levier de blocage 38.

L'invention trouve notamment à s'appliquer à bord d'un véhicule automobile dont les fonctions d'antivol sont partiellement ou totalement assurées par traitement de données dont certaines, contenues dans le support ou badge 12, sont représentatives d'un utilisateur autorisé, ou d'un groupe d'utilisateurs autorisés, du véhicule.

Le traitement des données vise notamment à comparer les données contenues dans le badge 12 avec des données mémorisées à bord du véhicule en vue de permettre l'utilisation autorisée du véhicule, le ou les circuits de traitement assurant la commande totale ou partielle de moyens formant antivol, qu'il s'agisse d'un antivol classique, c'est-à-dire agissant sur la colonne de direction du véhicule, et/ou de moyens empêchant le démarrage du moteur du véhicule et/ou interrompant le fonctionnement du moteur.

## Revendications

1. Agencement (10) pour l'échange de données entre un support de données rigide (12), ou semi-rigide, et un dispositif (14) d'échange de données, notamment de lecture de données contenues dans le support, qui équipe un véhicule automobile dont les fonctions d'antivol sont partiellement ou totalement assurées par traitement de données dont certaines, contenues dans le support de données (12), sont représentatives d'un utilisateur autorisé ou d'un groupe d'utilisateurs autorisés du véhicule, l'agencement comportant un boîtier (14,16) dans lequel le support (12), notamment en forme générale de badge, est introduit manuellement d'arrière en avant dans un logement (16) du boîtier (14) dans lequel il occupe une position active déterminée de fin de course d'introduction, dans lequel agencement dispositif (14) comporte des moyens (28, 38) pour retenir longitudinalement le support de données en position active dans le boîtier, dans lequel agencement le support de données (12) comporte, dans un bord (24) d'orientation longitudinale, un cran latéral (28) de blocage et le boîtier comporte un levier commandé (38) de blocage du support (12) qui est monté pivotant, autour d'un axe (A) perpendiculaire à la direction (I) longitudinale d'introduction du support de données (12) dans le boîtier, entre une position de blocage dans laquelle une extrémité libre du levier de blocage (38) formant un doigt de blocage (42) s'étend à l'intérieur du cran de blocage (28), et une position escamotée dans laquelle le doigt de blocage (42) est situé hors du cran (28) pour permettre l'extraction du support de données (12), d'avant en arrière, hors du boîtier (14), et dans lequel agencement le pivotement du levier de blocage (38) entre ses positions escamotée et de blocage est commandé par un bouton de commande (30, 36) qui est monté coulissant par rapport au boîtier (14), qui est relié (44) au levier de blocage (38) et qui est associé à un interrupteur de marche-arrêt (64) qui commande un circuit électrique de démarrage du véhicule, **caractérisé en ce que** le boîtier (14, 54) porte au moins un premier commutateur électrique (60) qui permet l'alimentation du circuit électrique de démarrage du véhicule et sur lequel le support de données (12, 26) vient agir lors de sa course d'introduction, d'arrière en avant, dans le bottier, le bouton de commande (30, 36) étant monté coulissant par rapport au boîtier selon une direction (A) sensiblement perpendiculaire à la direction (I) longitudinale d'introduction du support de données (12) dans le boîtier(14).

2. Agencement selon la revendication précédente, **caractérisé en ce que** le boîtier porte deux commutateurs (60, 62) qui sont agencés longitudinalement dans le boîtier (14) parmi lesquels ledit premier commutateur (60) et un deuxième commutateur électrique (62) qui permet l'alimentation électrique des accessoires, et **en ce que**, lors de l'introduction progressive du support de données dans le logement (16) du boîtier (14), d'arrière en avant, le corps du support de données (12) vient agir successivement sur le premier commutateur puis sur le deuxième commutateur électrique lorsque le support de données (12) est entièrement introduit en position active dans le logement (16) du boîtier (14).

3. Agencement selon la revendication 1 ou 2, **caractérisé en ce que** le bouton de commande est monté coulissant entre une position d'arrêt, dans laquelle le levier de blocage (38) est en position escamotée, et une position de marche dans laquelle le levier de blocage (38) est dans sa position de blocage du support de données (12).

4. Agencement selon l'une des revendications précédentes, **caractérisé en ce que** le bouton de commande (30, 36) est monté coulissant selon l'axe (A) de pivotement du levier de blocage (38) qui est relié au bouton de commande par des moyens (44) de transformation de mouvement qui convertissent chaque course linéaire du bouton de commande, (30, 36) entre ses positions de marche et d'arrêt, en une course angulaire du levier de blocage (38) entre ses positions de blocage et escamotée.

5. **Agencement selon la revendication précédente, caractérisé en ce que** les moyens (44) de transformation de mouvement bloquent angulairement le levier de blocage (38) dans un sens de manière à empêcher l'extraction du support de données (12), d'arrière en avant, lorsque le levier de blocage (38) est en position de blocage.

6. Agencement selon l'une des revendications 4 ou 5, **caractérisé en ce que** chaque course linéaire du bouton de commande (30, 36) provoque une rotation d'un quart de tour du levier de blocage (38) qui comporte deux doigts de blocage (42) diamétralement opposés.

7. Agencement selon l'une quelconque des revendications précédentes, **caractérisé en ce que** le bouton de commande comporte un élément coulissant dont une extrémité libre (52) agit sur un troisième commutateur électrique (64) d'alimentation électrique du démarreur du moteur du véhicule pour assurer la fonction d'interrupteur de marche arrêt.

## Claims

1. Arrangement (10) for exchange of data between a rigid or semi-rigid data medium (12), and a data exchange device (14), notably able to read data stored on the data medium, equipping an automobile vehicle whose anti-theft functions are partially or totally assured by processing data, some of these data being stored on the data medium (12) and associated with an authorized user or authorized group of users of the vehicle, the arrangement including a unit (14,16) in which the data medium (12), notably in the general form of a badge, is inserted manually from rear towards front into a housing (16) in the unit (14) in which it. occupies a predetermined active position at its end-of-travel position, the unit (14) including means (28, 38) for retaining longitudinally the data medium in the active position; and in said arrangement the data medium (12) includes on one longitudinal edge (24) a lateral blocking slot (28) and the unit includes a control lever (38) that blocks the data medium (12) and that is mounted pivoting about an axis (A) perpendicular to the longitudinal direction (I) of insertion of the data medium (12) into the unit, the blocking lever (38) pivoting between a blocking position in which one free end of the lever forms a blocking finger (42) extending into the blocking slot (28) and a retracted position in which the blocking finger (42) is located outside the slot (28) enabling extraction of the data medium (12), from front towards rear, out of the unit (14); and in said arrangement the pivoting of the blocking lever (38) between its retracted position and its blocking position is controlled by a control button (30, 36) that is mounted in a sliding manner relative to the unit (14) and linked (44) to the blocking lever (38) and that is associated with a start/stop switch (64) controlling an electrical starting circuit of the vehicle, wherein said unit (14, 54) includes at least one first electrical switch (60) controlling a power supply to the starting circuit of the vehicle, this switch being activated by said data medium (12, 26) during its insertion movement, from rear towards front, into said unit, said control button (30, 36) being mounted in a sliding manner relative to said unit along a direction (A) substantially perpendicular to the longitudinal direction (I) of insertion of said data medium (12) into said unit (14).

2. Arrangement according to the previous claim, wherein said unit carries two switches (60, 62) mounted longitudinally in the unit (14), these being said first electrical switch (60) and a second electrical switch (62) controlling the electrical power supply to accessories, and wherein during the progressive insertion of said data medium from rear towards front into said housing (16) of said unit (14) the body of said data medium (12) acts successively on the first switch then on the second switch when the data medium (12) is fully inserted and reaches its active position in said housing (16) of said unit (14).

3. Arrangement according to claim 1 or 2, wherein said control button is mounted in a sliding manner and able to slide between a stopping position in which said blocking lever (38) is in retracted position and a starting position in which said blocking lever (38) is in its position blocking said data medium (12).

4. Arrangement according to one of the previous claims, wherein said control button (30, 36) is mounted in a sliding manner along the pivoting axis (A) of said blocking lever (38) which is linked to said control button by movement transformation means (44) that convert each linear movement of said control button (30, 36) between its starting and stopping positions into an angular movement of said blocking lever (38) between its blocking and retracted positions.

5. Arrangement according to the previous claim, wherein said movement transformation means (44) block said blocking lever (38) angularly in a direction in such a manner as to prevent extraction of said data medium (12), from rear towards front, when said blocking lever (38) is in blocking position.

6. Arrangement according to one of claims 4 or 5, wherein each linear movement of said control button (30, 36) causes a quarter-turn rotation of said blocking lever (38) which carries two diametrically opposed blocking fingers (42).

7. Arrangement according to any of the previous claims, wherein said control button includes a sliding part of which one free end (52) acts on a third electrical switch (64) controlling the electrical power supply to the vehicle's engine starter in order to assure the start/stop switch function.

## Patentansprüche

1. Anordnung (10) für den Datenaustausch zwischen einem starren oder halbstarren Datenträger (12) und einer Vorrichtung (14) für den Austausch von Daten, insbesondere zum Lesen von im Träger enthaltenen Daten, mit der ein Kraftfahrzeug ausgestattet ist, bei dem die Diebstahlsicherungsfunktionen teilweise oder vollständig durch die Verarbeitung von Daten gewährleistet sind, von denen einige, die im Datenträger (12) enthalten sind, für einen zugelassenen Benutzer oder eine Gruppe zugelassener Benutzer des Fahrzeugs repräsentativ sind, wobei die Anordnung ein Gehäuse (14, 16) aufweist, in den der Träger (12), der insbesondere die allgemeine Form einer Kennmarke besitzt, manuell von hinten nach vorne in eine Aufnahme (16) des Gehäuses (14) eingesetzt wird, in der er eine aktive vorbestimmte Einführungsendstellung einnimmt, wobei bei der Anordnung die Vorrichtung (14) Mittel (28, 38) aufweist, um den Datenträger der Länge nach in der aktiven Stellung im Gehäuse zu halten, wobei bei der Anordnung der Datenträger (12) in einem Rand (24) mit Längsausrichtung eine seitliche Blockierungskerbe (28) aufweist und das Gehäuse einen gesteuerten Hebel (38) zur Blockierung des Trägers (12) aufweist, der so angebracht ist, dass er um eine Achse (A), die senkrecht zur Längsrichtung (I) des Einsetzens des Datenträgers (12) in das Gehäuse verläuft, zwischen einer Blockierungsstellung, in der sich ein freies, einen Blockierungszapfen (42) bildendes Ende des Blockierungshebels (38) in der Blockierungskerbe (28) erstreckt, und einer weggezogenen Stellung schwenkbar ist, in der sich der Blockierungszapfen (42) außerhalb der Kerbe (28) befindet, um die Entnahme des Datenträgers (12) von vorne nach hinten aus dem Gehäuse (14) zu ermöglichen, und wobei bei der Anordnung das Schwenken des Blockierungshebels (38) zwischen seiner weggezogenen Stellung und seiner Blockierungsstellung von einem Betätigungsknopf (30, 36) gesteuert wird, der so angebracht ist, dass er bezüglich des Gehäuses (14) gleitet, der mit dem Blockierungshebel (38) verbunden ist (44) und der einem Ein-Aus-Schalter (64) zugeordnet ist, welcher einen elektrischen Kreis zum Anlassen des Fahrzeugs steuert, **dadurch gekennzeichnet, dass** das Gehäuse (14, 54) mindestens einen ersten elektrischen Umschalter (60) trägt, der die Versorgung des elektrischen Kreises zum Anlassen des Fahrzeugs ermöglicht und auf den der Datenträger (12, 26) auf seinem Weg, bei dem er von hinten nach vorne in das Gehäuse eingesetzt wird, einwirkt, wobei der Betätigungsknopf (30, 36) so angebracht ist, dass er bezüglich des Gehäuses gemäß einer Richtung (A) gleitet, die im Wesentlichen senkrecht zur Längsrichtung (I) des Einsetzens des Datenträgers (12) in das Gehäuse (14) verläuft.

2. Anordnung nach dem vorhergehenden Anspruch, **dadurch gekennzeichnet, dass** das Gehäuse zwei der Länge nach im Gehäuse (14) angeordnete Umschalter (60, 62) trägt, nämlich den ersten Umschalter (60) und einen zweiten elektrischen Umschalter (62), der die elektrische Versorgung der Zubehörteile ermöglicht, und dass beim allmählichen Einsetzen des Datenträgers von hinten nach vorne in die Aufnahme (16) des Gehäuses (14) der Körper des Datenträgers (12) nacheinander auf den ersten Umschalter und dann auf den zweiten elektrischen Umschalter einwirkt, wenn der Datenträger (12) vollständig in einer aktiven Stellung in der Aufnahme (16) des Gehäuses (14) eingesetzt ist.

3. Anordnung nach Anspruch 1 oder 2, **dadurch gekennzeichnet, dass** der Betätigungsknopf so angebracht ist, dass er zwischen einer Ruhestellung, in der sich der Blockierungshebel (38) in der weggezogenen Stellung befindet, und einer Betriebsstellung gleitet, in der sich der Blockierungshebel (38) in seiner Stellung zur Blockierung des Datenträgers (12) befindet.

4. Anordnung nach einem der vorhergehenden Ansprüche, **dadurch gekennzeichnet, dass** der Betätigungsknopf (30, 36) so angebracht ist, dass er gemäß der Schwenkachse (A) des Blockierungshebels (38) gleitet, der über Bewegungsumwandlungsmittel (44) mit dem Betätigungsknopf verbunden ist, welche jeden linearen Weg des Betätigungsknopfes (30, 36) zwischen seiner Betriebs- und seiner Ruhestellung in einen Winkelweg des Blockierungshebels (38) zwischen dessen Blockierungsstellung und dessen weggezogener Stellung umsetzen.

5. Anordnung nach dem vorhergehenden Anspruch, **dadurch gekennzeichnet, dass** die Bewegungsumwandlungsmittel (44) den Blockierungshebel (38) winkelmäßig in einer Richtung so blockieren, dass die Entnahme des Datenträgers (12) von hinten nach vorne verhindert ist, wenn sich der Blockierungshebel (38) in der Blockierungsstellung befindet.

6. Anordnung nach Anspruch 4 oder 5, **dadurch gekennzeichnet, dass** jeder lineare Weg des Betätigungsknopfes (30, 36) eine Vierteldrehung des Blockierungshebels (38) bewirkt, der zwei diametral entgegengesetzte Blockierungszapfen (42) aufweist.

7. Anordnung nach einem der vorhergehenden Ansprüche, **dadurch gekennzeichnet, dass** der Betätigungsknopf ein gleitendes Element aufweist, bei dem ein freies Ende (52) auf einen dritten elektrischen Umschalter (64) zur elektrischen Versorgung des Anlassers des Fahrzeugmotors einwirkt, um die Ein-Aus-Schalter-Funktion zu gewährleisten.
